# EUROPEAN PATENT APPLICATION

(11) **EP 3 809 677 A1**
(43) Date of publication of application: **21.04.2021**
(21) Application number: 18939005.7
(22) Date of filing: 30.10.2018
(51) Int. Cl.: H04M 1/00

(54) **DATA PROCESSING METHOD AND DEVICE, AND PASS-THROUGH MACHINE GLASS**

(71) Applicant: SZ DJI Technology Co., Ltd., Shenzhen, Guangdong 518057 (CN)
(72) Inventor: XIANG, Chun, Shenzhen, Guangdong 518057 (CN); WU, Yifan, Shenzhen, Guangdong 518057 (CN); CHEN, Yongsen, Shenzhen, Guangdong 518057 (CN)
(74) Representative: Goddar, Heinz J.
(86) International application number: PCT/CN2018/112713
(87) International publication number: WO 2020/087282

(57) **Abstract**

An embodiment of the present disclosure provides a data processing method, a device, and a pair of racing drone goggles, the method includes receiving image transmission data; classifying and identifying a current image frame of the image transmission data; and storing images frames identified as a first type in a first storage device, and storing the images frames identified as a second type in a second storage device. By classifying and storing the image transmission data, the image transmission data can be prevented from being decoded by other terminal devices, and the data security is improved.

## Description

### TECHNICAL FIELD

The present disclosure relates to the field of control technology and, more specifically, to a data processing method, device, and a pair of racing drone goggles.

### BACKGROUND

First person view (FPV) is increasingly used on unmanned aerial vehicles (UAVs), and FPV can provide users with an immersive feeling. For example, a user wearing a pair of FPV goggles connected to a UAV can watch the scene captured by the UAV in real time. In the field of racing drones, FPV is a needed feature for most users. The racing drone is generally used with the FPV goggles, such that the user can directly experience the feeling of racing between obstacles. Therefore, when the user is operating the racing drone or competing in a racing drone competition, the image transmission content of the racing drone can be broadcasted such that more viewers can experience the FPV feeling. However, generally when the racing drone goggles receive real-time image transmission code stream, the racing drone goggles can continue to write the real-time image transmission code stream data to a SD card at a constant speed. Since the SD protocol that the SD card complies with is public, the data stream in the SD card can be intercepted and decoded by other device compatible with the SD protocol, such that the real-time video transmission stream content cannot be protected. Therefore, the effective protection of real-time image transmission code stream has become the focus of research.

### SUMMARY

The present disclosure provides a data processing method, device, and a racing drone goggles, which can prevent image transmission data from being decoded to improve data security.

In a first aspect, an embodiment of the present disclosure provides a data processing method including receiving image transmission data; classifying and identifying a current image frame of the image transmission data; and storing images frames identified as a first type in a first storage device, and storing the images frames identified as a second type in a second storage device.

In a second aspect, an embodiment of the present disclosure further provides a data processing method including receiving image transmission data; classifying and identifying a current image frame group of the image transmission data, and storing the current image frame group in a third storage device if the current image frame group is of a first type; classifying and identifying a next image frame group adjacent to the current image frame group in the image transmission data, and storing the next image frame group in a fourth storage device if the next image frame group is of a second type; and storing the current image frame group of the first type stored in the third storage device in the fourth storage device, wherein the current image frame group includes one or more image frames, and the next image frame group includes one or more image frames.

In a third aspect, an embodiment of the present disclosure provides a data processing device including a memory storing program instructions; and a processor configured to call the program instructions that, when executed by the processor, causes the processor to receive image transmission data; classify and identify a current image frame of the image transmission data; and store images frames identified as a first type in a first storage device, and store the images frames identified as a second type in a second storage device.

In a fourth aspect, an embodiment of the present disclosure provides another data processing device including a memory storing program instructions; and a processor configured to call the program instructions that, when executed by the processor, causes the processor to receive image transmission data; classify and identify a current image frame group of the image transmission data, and store the current image frame group in a third storage device if the current image frame group is of a first type; classify and identify a next image frame group adjacent to the current image frame group in the image transmission data, and store the next image frame group in a fourth storage device if the next image frame group is of a second type; and store the current image frame group of the first type stored in the third storage device in the fourth storage device. The current image frame group includes one or more image frames, and the next image frame group includes one or more image frames.

In a fifth aspect, an embodiment of the present disclosure provides a pair of racing drone goggles including a first storage device for storing a first type of image frames of received image transmission data; a second storage device for storing a second type of image frames of the received image transmission data; a processor configured to receive image transmission data; classify and identify a current image frame of the image transmission data; and store images frames identified as the first type in the first storage device, and store the images frames identified as the second type in the second storage device.

In a sixth aspect, an embodiment of the present disclosure provides another pair of racing drone goggles including a third storage device for storing a current image frame group of a first type of received image transmission data; a fourth storage device for storing a next image frame group of a second type of the received image transmission data; a processor configured to receive image transmission data; classify and identify the current image frame group of the image transmission data, and store the current image frame group in the third storage device if the current image frame group is of the first type; classify and identify the next image frame group adjacent to the current image frame group in the image transmission data, and store the next image frame group in the fourth storage device if the next image frame group is of the second type; and store the current image frame group of the first type stored in the third storage device in the fourth storage device. The current image frame group includes one or more image frames, and the next image frame group includes one or more image frames.

In a seventh aspect, an embodiment of the present disclosure provides a computer-readable storage medium. The computer-readable storage medium is configured to store a computer program. The data processing method described in the first or second aspect can be implemented when the computer program is executed by a processor.

In the embodiments of the present disclosure, the data processing device can classify and identify the current image frame of the received image transmission data, store the image frames identified as the first type in the first storage device, and store the image frames identified as the second type in the second storage device. By using this method, the image transmission data can be prevented from being decoded b other terminal devices, and the data security is improved.

### BRIEF DESCRIPTION OF THE DRAWINGS

In order to illustrate the technical solutions in accordance with the embodiments of the present disclosure more clearly, the accompanying drawings to be used for describing the embodiments are introduced briefly in the following. It is apparent that the accompanying drawings in the following description are only some embodiments of the present disclosure. Persons of ordinary skill in the art can obtain other accompanying drawings in accordance with the accompanying drawings without any creative efforts.
FIG. 1A is a schematic diagram of a structure of image transmission data used for live broadcast in conventional technology.
FIG. 1B is a schematic structural diagram of the image transmission data used for live broadcast according to an embodiment of the present disclosure.
FIG. 2 is a schematic structural diagram of a data processing system according to an embodiment of the present disclosure.
FIG. 3 is a flowchart of a data processing method according to an embodiment of the present disclosure.
FIG. 4 is a flowchart of another data processing method according to an embodiment of the present disclosure.
FIG. 5 is a schematic structural diagram of a data processing device according to an embodiment of the present disclosure.
FIG. 6 is a schematic structural diagram of another data processing device according to an embodiment of the present disclosure.

### DETAILED DESCRIPTION OF THE EMBODIMENTS

Technical solutions of the present disclosure will be described in detail with reference to the drawings. It will be appreciated that the described embodiments represent some, rather than all, of the embodiments of the present disclosure. Other embodiments conceived or derived by those having ordinary skills in the art based on the described embodiments without inventive efforts should fall within the scope of the present disclosure.

Exemplary embodiments will be described with reference to the accompanying drawings. Unless a conflict exists, the embodiments and features of the embodiments can be combined.

The data processing method provided in the embodiments of the present disclosure can be executed by a data processing device. In some embodiments, the data processing method may be applied to a smart terminal with an image transmission function. In other embodiments, the data processing method may also be applied to a pair of racing drone goggles. In the embodiments of the present disclosure, a first storage device and a second storage device can be arranged in the data processing device to store image transmission data. In one embodiment, the first storage device and the second storage device may be disposed in the data processing device. In other embodiments, the first storage device and the second storage device may be independent of the data process device, that is, the first storage device and the second storage device may be disposed on other devices that can establish a communication connection with the data processing device. In one embodiment, the broadcast device may establish a communication connection with the data processing device. More specifically, when the data processing device receives image transmission data sent by other devices, the data processing device may classify and identify the image transmission data, and then store the image frames identified as a first type in the first storage device, and the image frames identified as a second type in the second storage device to prevent other terminal devices from intercepting the image frames of the image transmission data from the second storage device in real time in the transmission order, prevent image transmission data from being decoded by other terminal devices, thereby improving the data security. Next, an example of a data processing method using the racing drone goggles will be described with reference to the accompanying drawings.

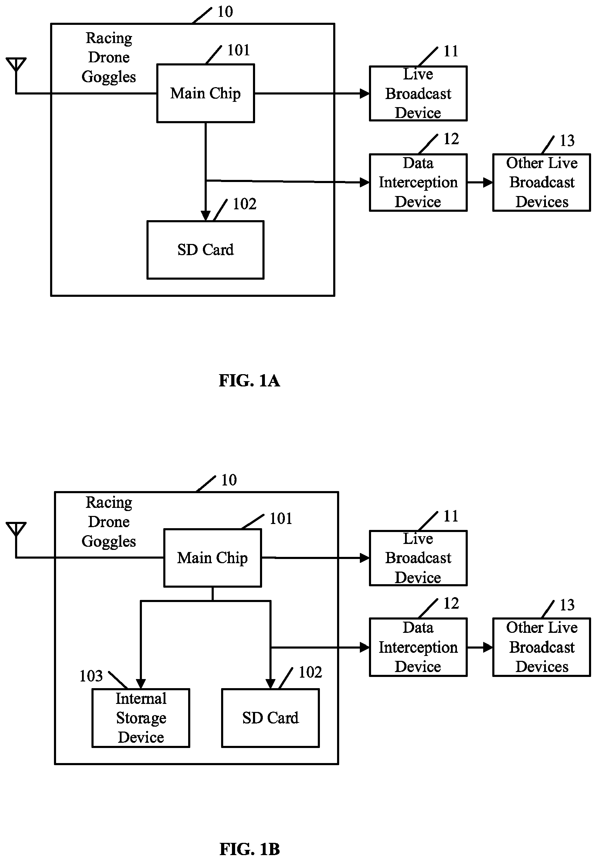

Embodiments of the present disclosure provide a live broadcast method of image transmission code stream as shown in FIG. 1B for the conventional live broadcast method of image transmission code stream as shown in FIG. 1A. The method shown in FIG. 1B can be used to prevent the image stream data in FIG. 1A from being intercepted and decoded by other devices during live broadcast. FIG. 1A is a schematic diagram of a structure of image transmission data used for live broadcast in conventional technology, and FIG. 1B is a schematic structural diagram of the image transmission data used for live broadcast according to an embodiment of the present disclosure.

As shown in FIG. 1A, in conventional technology, a pair of racing drone goggles 10 can receive real-time image transmission data, and the pair of racing drone goggles 10 can send the received image transmission data to a SD card 102 for storage through a main chip 101. The racing drone goggles can send the image transmission data received by the main chip 101 to a designated live broadcast device 11 through a data interface, such as a USB interface. Since the image transmission data is stored in the SD card 102, therefore, when a data interception device 12 satisfying the SD protocol establishes a communication connection with the SD card 102, the data interception device 12 may intercept the image transmission data received by the pair of racing drone goggles 10 and the receiving sequence of the image transmission data from the SD card 102, such that the data interception device 12 may decode the image transmission data to obtain a video stream corresponding to the image transmission data. The data interception device 12 may send the decoded video stream to other live broadcast devices 13 for live broadcast, resulting in leakage of image transmission data.

For the method described in FIG. 1A, an embodiment of the present disclosure provides a schematic structural diagram of image transmission data used for live broadcast as shown in FIG. 1B. As shown in FIG. 1B, in the embodiments of the present disclosure, two storage devices are disposed in the pair of racing drone goggles 10, including the first storage device, which is an internal storage device 103, and the second storage device, which is the SD card. The pair of racing drone goggles 10 can receive the image transmission data through the main chip 101, classify the received image transmission data based on a predetermined rule, send the first type of image transmission data to the SD card 102, and store the second type of image transmission data transmission value in the internal storage device 103. The racing drone goggles can send the image transmission data received by the main chip 101 to a designated live broadcast device 11 through a data interface, such as a USB interface. Since only the second type of image transmission data is stored in the SD card 102, therefore, the data interception device 12 satisfying the SD protocol that establishes a communication connection with the SD card 102 can only intercept a part of the image transmission data from the SD card 102, instead of all image transmission data and the transmission sequence of each image transmission data, such that the data interception device 12 cannot decode the obtained image transmission data to obtain the correct video stream. Even if the data interception device 12 sends the decoded video stream to other live broadcast devices 13, the other live broadcast devices 13 cannot perform live broadcast, thereby avoiding data leakage and improving data security.

For example, the pair of racing drone goggles 10 may store the image frames of the image transmission data received in the current second to the internal storage device 103, and store the image frames in the image transmission data in the next second to the SD card 102. In this way, the data intercepted by the data interception device 12 will lack a part of the key frame data and one second of the image transmission data. Therefore, the 12 will experience blurring and freezing during decoding, such that the other live broadcast devices 13 cannot achieve the purpose of live broadcast. In this way, the leakage of image transmission data is avoided and data security is improved.

In another example, the pair of racing drone goggles 10 may write the image transmission data out of time sequence. The pair of racing drone goggles 10 may first cache the received image transmission data of the nth second in the internal storage device 103, and continue to receive the image transmission data of the n+1th second. The pair of racing drone goggles 10 may first write the image transmission data of the n+1th second to the SD card 102, and then write the image transmission data of the nth second cached in the internal storage device 103 into the SD card 102 for storage. Through this alternate storage method, the time sequence of the transmission of the image transmission data is disrupted, such that the data interception device 12 cannot obtain the correct transmission time sequence of all image transmission data. Therefore, even if the data interception device 12 intercepts all image transmission data from the SD card, since the time sequence of the obtained image transmission data is incorrect, the correct video stream cannot be decoded during decoding, resulting in blurring or freezing, and cannot be used by the other live broadcast devices 13 for live broadcast purposes.

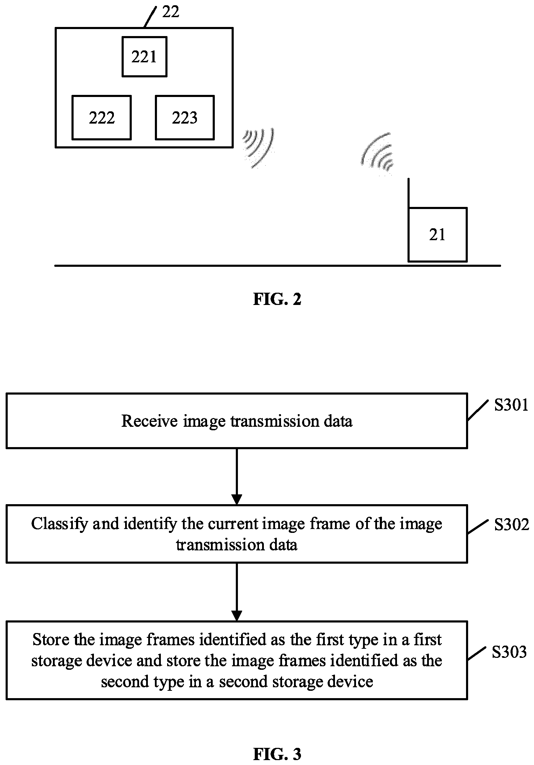

Referring to FIG. 2. FIG. 2 is a schematic structural diagram of a data processing system according to an embodiment of the present disclosure. The system includes a data processing device 21 and a pair of racing drone goggles 22. In one embodiment, the data processing device 21 may be disposed in the pair of racing drone goggles 22. In other embodiments, the data processing device 21 may be a smart terminal that can establish a communication connection with the pair of racing drone goggles 22. The data processing device 21 may be one or more of a remote control, a smart phone, a tablet, a laptop, a ground station, and a wearable device (a watch or a bracelet). The pair of racing drone goggles 22 may include a processor 201, a first storage device 222, and a second storage device 223.

In one embodiment, the data processing device 21 may be configured to receive image transmission data sent by other terminal devices that establish a communication connection with the data processing device 21, and classify and identify the current image frame of the image transmission data. After the data processing device 21 classifies and identifies the current image frame of the image transmission data, the image frame identified as the first type may be stored in the first storage device 222, and the image frame identified as the second type may be stored in the second storage device 223. In one embodiment, the image transmission data may include image data and/or video data.

In one embodiment, when the data processing device 21 receives a reorganization instruction, the data processing device 21 may writ the image frames of the first type stored in the first storage device 222 in the second storage device 223, and combine the image frames of the first type with the image frames of the second type in the second storage device 223 to obtain a first target video stream.

In one embodiment, if the data processing device 21 receives a data acquisition request sent by a live broadcast device that establishes a communication connection with the data processing device 21, it may verify the access authority of the live broadcast device. If the verification is successful, the data processing device 21 may send the first target video stream to the live broadcast device, such that the live broadcast device may output the first target video stream.

Referring to FIG. 3. FIG. 3 is a flowchart of a data processing method according to an embodiment of the present disclosure. The method may be executed by a data processing device. The specific explanation of the data processing device is described above, which will not be repeated here. More specifically, the method of the present disclosure includes the following processes.

S301, receiving image transmission data.

In the embodiments of the present disclosure, the data processing device may be configured to receive image transmission data sent by other terminal devices that establish a communication connection with the data processing device. In one embodiment, the image transmission data may include video data, and the image transmission data may also include image data, which is not limited in the embodiments of the present disclosure.

S302, classifying and identifying the current image frame of the image transmission data.

In the embodiments of the present disclosure, after receiving the image transmission data, the data processing device may classify and identify the current image frame of the image transmission data.

In one embodiment, when the data processing device classifies and identifies the current image frame of the image transmission data, it may determine whether the current image frame in the image transmission data is a key image frame. If it is determined that the current image frame is a key image frame, the current image frame may be determined as the first type. If it is determined that the current image frame is not a key image frame, the current image frame may be determined as the second type.

In one embodiment, when the data processing device classifies and identifies the current image frame of the image transmission data, it may classify the current image frame in the image transmission data based on a first classification rule to obtain the first type image frame, and classify the next image frame in the image transmission data based on the first classification rule to obtain the second type image frame. In one embodiment, the first classification rule may be determined based on the image sequence number of the image frame in the image transmission data. In other embodiments, the image sequence number may be determined based on the sequence of transmission of the image frames in the image transmission code stream.

In one embodiment, the first classification rule may classify the image frames in the received image transmission data based on the parity of the image sequence numbers of the image frames. If the image sequence number of the current image frame obtained by the data processing device is an odd number, the current image frame may be determined as a first type image frame. Further, if the image sequence number of the next image frame adjacent to the current image frame obtained by the data processing device is an even number, the next image frame may be determined as a second type image frame.

For example, assume the image frames in the image transmission data received by the data processing device include four frames, and the image sequence numbers of the image frames are 1, 2, 3, and 4 respectively. If the image sequence number of the current image frame obtained by the data processing device is 1, the current image frame may be determined as the first type image frame. If the image sequence number of the next image frame adjacent to the current image frame group obtained by the data processing device is 2, the next image frame may be determined as the second type image frame. By analogy, the data processing device may determine the obtained image frame with the image sequence number of 3 as the first type image frame, and determine the obtained image frame with the image sequence number of 4 as the second type image frame,

In one embodiment, the first classification rule may classify the image frames in the received image transmission data based on the digits of the image sequence number. If the image sequence number of the current image frame obtained by the data processing device is a single digit sequence number, the current image frame may be determined as the first type image frame. Further, if the image sequence number of the next image frame adjacent to the current image frame group obtained by the data processing device is a multi-digit sequence number, the next image frame may be determined as the second type image frame.

For example, assume that the image frames in the image transmission data received by the data processing device include fourteen frames, and the image sequence number of the image frames are 1, 2... 14, and 14 respectively. The image frames with image sequence numbers of 1 to 9 in the image transmission data may be determined as the first type image frames, and the next image frame with the image sequence numbers of 10 to 14 in the image transmission data may be determined as the second type image frames.

In other embodiments, the first classification rule may be any classification rule associated with the image sequence number of the image frame predetermined by the user based on needs, which is not specifically limited in the embodiments of the present disclosure.

In one embodiment, after receiving the image transmission data, the data processing device may classify the current image frame in the image transmission data based on a second classification rule to obtain the first type image frame, and classify the next image frame in the image transmission data based on the second classification rule to obtain the second type image frame. image frame the second classification rule may be determined based on the time of receiving the image frame in the image transmission data.

In one embodiment, the second classification rule may classify the image frames in the image transmission data based on the time when the image frames in the image transmission data are received. The data processing device may determine the image frame received at a first time as the first type image frame, determined the image frame received at a time interval as the first type image frame, and determined the image frame received at other times as the second type image frame.

For example, assume that the video frame rate of the image transmission data received by the data processing device is 30 fps, indicating that the data processing device will receive thirty frames of images per second. Then the image frame at t = t0 may be determined as the first type image frame, the image frames received at t = t0 + N ^{∗} 0.5s (N is a positive integer) may be determined as the first type image frames, and the other fourteen frames received within a time range of (t0 + (N - 1) ^{∗} 0.5s, t0 + N ^{∗} 0.5s) may be determined as the second type image frames. Of course, the video frame rate can also be any other video frame rate, such as 24 fps, 48 fps, 60 fps, 120 fps, etc. The period is not limited to 0.5s, but can be 0.05s, 0.1a, 0.2s, 0.8s,1s, etc. Alternatively, the period may not be limited to fifteen frames as the period, and may also be four frames, eight frames, twelve frames, sixteen frames, twenty frames, and so on.

In one embodiment, the second classification rule may classify the image frames in the image transmission data based on a time range of receiving the image frames in the image transmission data. In some embodiments, the data processing device may determine the image frames received within a first predetermined time rage as the first type image frames, determine the image frames received within a second predetermined time range as the second type image frames, and determined the image frames received within a third predetermined time range as the first type image frames based on the time sequence the received image frame, and so on to determine the image frames received within a Nth predetermined time rage as the first type image frames, and determine the image frames received within N+1th predetermined time range as the second type image frames.

For example, assume that the predetermined time range is ten second. If the time the data processing device receiving the image transmission data is forty seconds, the data processing device may determine the image frames received within [0, 10s) as the first type image frames, determine the image frames received within the time range of [10s, 20s) as the second type image frames, determine the image frames received within the time range of [20s, 30s) as the first type image frames, and determine the image frames received within the time range of [30s, 40s) as the second type image frames.

S303, storing the image frames identified as the first type in the first storage device and storing the image frames identified as the second type in the second storage device.

In the embodiments of the present disclosure, after classifying and identifying the current image frame of the image transmission data, the data processing device may store the image frames identified as the first type in the first storage device, and store the image frames identified as the second type in the second storage device. In one embodiment, the first storage device may be an internal storage device in the data processing device, and the second storage device may be an SD card storage device.

In one embodiment, after the data processing device stores the image frames identified as the first type in the first storage device and the image frames identified as the second type in the second storage device, if the reorganization instruction is received, the first type image frames stored in the first storage device and the second type image frames stored in the second storage device may be reorganized to obtain the first target video stream.

In some embodiments, the reorganization instruction may be triggered when the data processing device receives the image transmission data. In some embodiments, the reorganization instruction may be an instruction sent by another device received by the data processing device. In some embodiments, the reorganization instruction may be triggered by the data processing device when receiving a data acquisition request sent by the live broadcast device. In other embodiments, the reorganization instruction may be generated by the data processing device based on an obtained user operation, which is not limited in the embodiments of the present disclosure.

In one embodiment, if the data processing device receives the data acquisition request sent by the live broadcast device, it may verify the access authority of the live broadcast device. If the verification is successful, the image transmission data obtained by the data processing device may be sent to the live broadcast device. If the verification is unsuccessful, it may refuse to send the image transmission data obtained by the data processing device to the live broadcast device.

In one embodiment, if the data processing device receives the data acquisition request sent by the live broadcast device, it may verify the access authority of the live broadcast device. If the verification is successful, the reorganized first target video stream may be sent to the live broadcast device. If the verification is unsuccessful, it may refuse to send the reorganized first target video stream to the live broadcast device.

More specifically, FIG. 1B can be used as an example. Assume that the data processing device is disposed in the pair of racing drone goggles 10 in FIG. 1B, the first storage device is an internal storage device 103, and the second storage device is an SD card. Therefore, if the pair of racing drone goggles 10 receives the data acquisition request sent by the live broadcast device 11, the access authority of the live broadcast device 11 may be verified. If the verification is successful, the image transmission data received by the pair of racing drone goggles 10 may be sent to the live broadcast device 11 through the main chip 101. If the verification is unsuccessful, the pair of racing drone goggles 10 may refuse to send the received image transmission data to the live broadcast device 11.

In another example, assume that the data processing device is disposed in the pair of racing drone goggles 10 in FIG. 1B. Therefore, when the data processing device receives the data acquisition request sent by the live broadcast device 11, it may verify the access authority of the live broadcast device 11. If the verification is successful, the image transmission data received by the pair of racing drone goggles 10 may be send to the live broadcast device 11 through the main chip 101. If the verification is unsuccessful, the pair of racing drone goggles 10 may refuse to send the received image transmission data to the live broadcast device 11.

In the embodiments of the present disclosure, data processing device can classify and identify the current image frame of the received image transmission data, store the image frames identified as the first type in the first storage device, and store the image frames identified as the second type in the second storage device. By using this method, the image transmission data can be prevented from being decoded b other terminal devices, and the data security is improved.

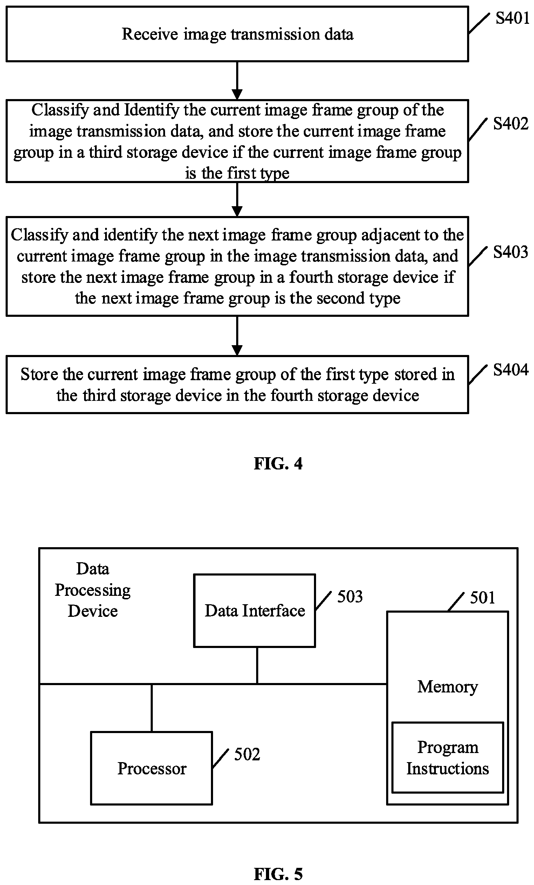

Referring to FIG. 4. FIG. 4 is a flowchart of another data processing method according to an embodiment of the present disclosure. The method may be executed by a data processing device. The specific explanation of the data processing device is described above, which will not be repeated here. More specifically, the method of the present disclosure includes the following processes.

S401, receiving image transmission data.

In the embodiments of the present disclosure, the data processing device may be configured to receive image transmission data sent by other terminal devices that establish a communication connection with the data processing device. The explanation of the image transmission data is as described above, and will not be repeated here.

S402, classifying and identifying the current image frame group of the image transmission data, and storing the current image frame group in a third storage device if the current image frame group is the first type.

In the embodiments of the present disclosure, the data processing device may classify and identify the current image frame group of the image transmission data. If the current image frame group is the first type, the current image frame group may be stored in the third storage device. In one embodiment, the current image frame group may include one or more image frames, and the next image frame group may include one or more image frames. In one embodiment, the third storage device may be an internal storage device in the data processing device, and the third storage device may also be a storage device that establishes a communication connection with the data processing device.

In one embodiment, when the data processing device classifies and identifies the current image frame group of the image transmission data, it may determine the type of the current image frame group of the image transmission data based on the time when the current image frame group of the image transmission data is received.

In one embodiment, the current image frame group may include one image frame. If it is detected that the time the data processing device receives the current image frame of the image transmission data is the nth second, the type of the current image frame may be determined as the first type, and the current image frame may be stored in the third storage device.

For example, assume that the current image frame group is an image frame. If it is detected that the time the data processing device receives the current image frame of the image transmission data is the first second, the type of the current image frame may be determined as the first type, and the current image frame may be stored in the third storage device.

In one embodiment, the current image frame group may include a plurality of image frames. If it is detected that the time the data processing device receives the current image frame group of the image transmission data is the nth second, the type of the current image frame group may be determined as the first type, and the current image frame group may be stored in the third storage device.

For example, assume that the image frame group includes m image frames. If it is detected that the time the mth image frame in the current image frame group of the image transmission data received by the data processing device is the nth second, then the type of the mth image frame in the current image frame group may be determined as the first type, and the mth image frame of the current image frame group may be stored in the third storage device.

S403, classifying and identifying the next image frame group adjacent to the current image frame group in the image transmission data, and storing the next image frame group in a fourth storage device if the next image frame group is the second type.

In the embodiments of the present disclosure, the data processing device 21 may classify and identify the next image frame group adjacent to the current image frame group in the image transmission data. If the next image frame group is the second type, the next image frame group may be stored in the fourth storage device. In one embodiment, the fourth storage device may be an SD card storage device.

In one embodiment, when the data processing device classifies and identifies the next image frame group adjacent to the current image frame group in the image transmission data, it may determine the type of the next image frame group of the image transmission data based on the time the next image frame group adjacent to the current image frame group of the image transmission data is received.

For example, assume that the image frame group includes one image frame. If it is detected that the time the data processing device receives the current image frame of the image transmission data is the first second, the type of the current image frame may be determined as the first type, and the current image frame may be stored in the third storage device. The data processing device may continue to receive image frames. When the data processing device receives the next image frame in the second second, it may determine the next image frame as the second type and store the next image frame in the fourth storage device.

In another example, assume that the image frame group includes m image frames. If it is detected that the time the mth image frame in the current image frame group of the image transmission data received by the data processing device is the nth second, then the type of the mth image frame in the current image frame group may be determined as the first type, and the mth image frame of the current image frame group may be stored in the third storage device. The data processing device may continue to receive image frames. When the data processing device receives the next image frame in the second second, it may determine that the mth image frame in the next image frame group is the second type, and store the mth image frame in the next image frame group in the fourth storage device.

S404, storing the current image frame group of the first type stored in the third storage device in the fourth storage device.

In the embodiments of the present disclosure, the data processing device may store the current image frame group of the first type stored in the third storage device in the fourth storage device.

In one embodiment, when the data processing device detects that the image frame group received by the data processing device is stored every time in the fourth storage device, it may write the image frame group stored in the third storage device into the fourth storage device. Then the data processing device may store newly received image frame group in the third storage device, and store the next image frame group received by the data processing device in the fourth storage device.

For example, assume that the image frame group includes one image frame. If the data processing device receives the current image frame of the image transmission data in the first second, it may determine the type of the current image frame as the first type, and store the current image frame in the third storage device. The data processing device may continue to receive image frames. When the data processing device receives the next image frame in the second second, it may determine the next image frame as the second type and store the next image frame in the fourth storage device. After the data processing device stores the next image frame in the fourth storage device, the data processing device may store the image frame received in the first second stored in the third storage device in the fourth storage device as a cycle. The data processing device may continue to store the image frame received in the third second to the third storage device, store the image receive in the fourth second to the fourth storage device, and write the image frame received in the second in the third storage device into the fourth storage device, and so on as a cyclic storage.

In one embodiment, after the data processing device stores the first type current image frame group stored in the third storage device in the fourth storage device, if the data processing device received the reorganization instruction, the first type current image frame group and the second type next image frame group may be reorganized to obtain a second target video stream.

In one embodiment, the reorganization instruction may be triggered when the data processing device receives the image transmission data. In some embodiments, the reorganization instruction may be a reorganization instruction received by the data processing device and sent by another device. In some embodiments, the reorganization instruction may be triggered by the data processing device when a data acquisition request sent by the live broadcast device is received. In other embodiments, the reorganization instruction may be generated by the data processing device based on an obtained user operation, which is not limited in the embodiments of the present disclosure.

In one embodiment, if the data acquisition request sent by a live broadcast device is received, the access authority of the live broadcast device may be verified. If the verification is successful, the obtained image transmission data may be sent to the live broadcast device. If the verification is unsuccessful, the obtained image transmission data may be refused to be sent to the live broadcast device. The specific examples are similar to the above description, which will not be repeated here.

In one embodiment, if the data acquisition request sent by a live broadcast device is received, the access authority of the live broadcast device may be verified. If the verification is successful, the second target video stream obtained by the reorganization may be sent to the live broadcast device. If the verification is unsuccessful, the second target video stream reorganized in the fourth storage device may be refused to be sent to the fourth storage device.

In the embodiments of the present disclosure, the data processing device can classify and identify the current image frame group of the received image transmission data. If the current image frame group is the first type, the current image frame group may be stored in the third storage device. The data processing device can classify and identify the next image frame group adjacent to the current image frame group in the image transmission data. If the next image frame group is the second type, the next image frame group may be stored in the fourth storage device. The data processing device may store the current image frame group of the first type stored in the third storage device in the fourth storage device. By using this method, the image transmission data can be prevented from being decoded by other terminal devices, thereby improving the data security.

Referring to FIG. 5. FIG. 5 is a schematic structural diagram of a data processing device according to an embodiment of the present disclosure. More specifically, the data processing device includes a memory 501, a processor 502, and a data interface 503.

The memory 501 may include a volatile memory. The memory 501 may also incldue a non-volatile memory. The memory 501 may also include a combination of the above types of memories. The processor 502 may be a central processing unit (CPU). The processor 502 may further incldue a hardware data processing device. The above hardware data processing device may be an application-specific integrated circuit (ASIC), a programmable logic device (PLD), or a combination thereof. More specifically, it may be a complex programmable logic device (CPLD) a field-programmable gate array (FPGA), or any combination thereof.

Further, the memory 501 can be used to store program instructions. When the program instructions are executed, the processor 502 may call the program instructions stored in the memory 501 to perform the following processes of receiving image transmission data; classifying and identifying the current image frame of the image transmission data; and storing the image frames identified as the first type in the first storage device and storing the image frames identified as the second type in the second storage device.

Further, after the processor 502 stores the image frames as the first type in the first storage device and stores the image frames identified as the second type in the second storage device, the processor 502 may be further configured to reorganized the first type image frames stored in the first storage device and the second type image frames stored in the second storage device to obtain the first target video stream when a reorganization instruction is received.

Further, when classifying and identifying the current image frame of the image transmission data, the processor 502 may be configured to detect whether the current image frame of the image transmission data is a key image frame; determine the current image frame as the first type image frame if the detection result is positive; and determine the current image frame as second type if the detection result is negative.

Further, when classifying and identifying the current image frame of the image transmission data, the processor 502 may be configured to classify the current image frame in the image transmission data based on the first classification rule to obtain the first type image frame; classify the next image frame in the image transmission data based on the first classification rule to obtain the second type image frame, where the first classification rule may be determined based on the image sequence number of the image frame in the image transmission data, and the image sequence number may be determined based on the order in which the image frame is transmitted in the image transmission code stream.

Further, when classifying and identifying the current image frame of the image transmission data, the processor 502 may be configured to classify the current image frame in the image transmission data based on the second classification rule to obtain the first type image frame; classify the next image frame in the image transmission data based on the second classification rule to obtain the second type image frame, where the second classification rule may be determined based on the time the image frame in the image transmission data is received.

Further, the processor 502 may be further configured to verify the access authority of a live broadcast device in response to receiving a data acquisition request sent by the live broadcast device; send the image transmission data obtained by the data processing device to the live broadcast device if the verification is successful; and refuse to send the image transmission data obtained by the data processing device to the live broadcast device if the verification is unsuccessful.

Further, the processor 502 may be further configured to verify the access authority of the live broadcast device in response to receiving a data acquisition request sent by the live broadcast device; send the reorganized first target video stream to the live broadcast device if the verification is successful; and refuse to send the reorganized first target video stream to the live broadcast device if the verification is unsuccessful.

In the embodiments of the present disclosure, the data processing device can classify and identify the current image frame of the received image transmission data, store the image frames identified as the first type in the first storage device, and store the image frames identified as the second type in the second storage device. By using this method, the image transmission data can be prevented from being decoded b other terminal devices, and the data security is improved.

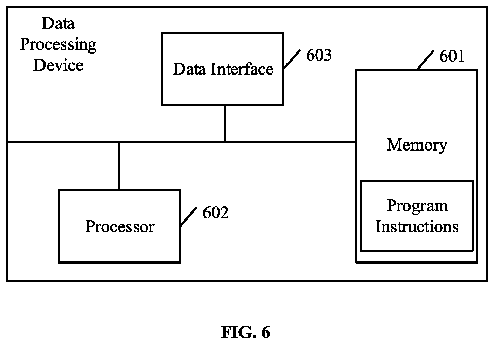

Referring to FIG. 6. FIG. 6 is a schematic structural diagram of another data processing device according to an embodiment of the present disclosure. More specifically, the data processing device includes a memory 601, a processor 602, and a data interface 603.

The memory 601 may include a volatile memory. The memory 601 may also incldue a non-volatile memory. The memory 601 may also include a combination of the above types of memories. The processor 602 may be a central processing unit (CPU). The processor 602 may further incldue a hardware data processing device. The above hardware data processing device may be an application-specific integrated circuit (ASIC), a programmable logic device (PLD), or a combination thereof. More specifically, it may be a complex programmable logic device (CPLD) a field-programmable gate array (FPGA), or any combination thereof.

Further, the memory 601 can be used to store program instructions. When the program instructions are executed, the processor 602 may call the program instructions stored in the memory 601 to perform the following processes of receiving image transmission data; classify and identify the current image frame group of the image transmission data and store the current image frame group in the third storage device if the current image frame group is the first type; classify and identify the next image frame group adjacent to the current image frame group in the image transmission data and store the next image frame group in the fourth storage device if the next image frame group is the second type; and store the current image frame group of the first type stored in the third storage device in the fourth storage device, where the current image frame group may include one or more image frames, and the next image frame group may include one or more image frames.

Further, after storing the current image frame group of the first type stored in the third storage device in the fourth storage device, the processor 602 may be further configured to reorganized the current image frame group of the first type and the next image frame group of the second type stored in the fourth storage device to obtain the second target video stream when the reorganization instruction is received.

Further, when classifying the identifying the current image frame group of the image transmission data, the processor 602 may be configured to determine the type of the current image frame group of the image transmission data based on the time when the current image frame group of the image transmission data is received.

Further, when classifying the identifying the next image frame group adjacent to the current image frame group in the image transmission data, the processor 602 may be configured to determine the type of the next image frame group of the image transmission data based on the time the next image frame group adjacent to the current image frame group in the image transmission data is received.

Further, the processor 602 may be further configured to verify the access authority of a live broadcast device in response to receiving a data acquisition request sent by the live broadcast device; send the obtained image transmission data to the live broadcast device if the verification is successful; and refuse to send the obtained image transmission data to the live broadcast device if the verification is unsuccessful.

Further, the processor 602 may be further configured to verify the access authority of a live broadcast device in response to receiving a data acquisition request sent by the live broadcast device; send the second target video stream reorganized in the fourth storage device to the live broadcast device if the verification is successful; and refuse to the second target video stream reorganized in the fourth storage device to the live broadcast device if the verification is unsuccessful.

In the embodiments of the present disclosure, the data processing device can classify and identify the current image frame group of the received image transmission data, store the current image frame group in the third storage device if the current image frame group is the first type; classify and identify the next image frame group adjacent to the current image frame group in the image transmission data; store the next image frame group in the fourth storage device if the next image frame group is the second type; and store the current image frame group of the first type stored in the third storage device in the fourth storage device. By using this method, the image transmission data can be prevented from being decoded b other terminal devices, and the data security is improved.

An embodiment of the present disclosure further provides a pair of racing drone goggles including a first storage device for storing the first type image frames of the received image transmission data; a second storage device for storing the second type image frames of the received image transmission data; and a processor configured to receive the image transmission data; classify and identify the current image frame of the image transmission data; and store the image frames identified as the first type in the first storage device, and store the image frames identified as the second type in the second storage device.

Further, after the processor stores the image frames as the first type in the first storage device and stores the image frames identified as the second type in the second storage device, the processor may be further configured to reorganized the first type image frames stored in the first storage device and the second type image frames stored in the second storage device to obtain the first target video stream when a reorganization instruction is received.

Further, when classifying and identifying the current image frame of the image transmission data, the processor may be configured to detect whether the current image frame of the image transmission data is a key image frame; determine the current image frame as the first type image frame if the detection result is positive; and determine the current image frame as second type if the detection result is negative.

Further, when classifying and identifying the current image frame of the image transmission data, the processor may be configured to classify the current image frame in the image transmission data based on the first classification rule to obtain the first type image frame; classify the next image frame in the image transmission data based on the first classification rule to obtain the second type image frame, where the first classification rule may be determined based on the image sequence number of the image frame in the image transmission data, and the image sequence number may be determined based on the order in which the image frame is transmitted in the image transmission code stream.

Further, when classifying and identifying the current image frame of the image transmission data, the processor may be configured to classify the current image frame in the image transmission data based on the second classification rule to obtain the first type image frame; classify the next image frame in the image transmission data based on the second classification rule to obtain the second type image frame, where the second classification rule may be determined based on the time the image frame in the image transmission data is received.

Further, the processor may be further configured to verify the access authority of a live broadcast device in response to receiving a data acquisition request sent by the live broadcast device; send the image transmission data obtained by the data processing device to the live broadcast device if the verification is successful; and refuse to send the image transmission data obtained by the data processing device to the live broadcast device if the verification is unsuccessful.

Further, the processor may be further configured to verify the access authority of the live broadcast device in response to receiving a data acquisition request sent by the live broadcast device; send the reorganized first target video stream to the live broadcast device if the verification is successful; and refuse to send the reorganized first target video stream to the live broadcast device if the verification is unsuccessful.

In the embodiments of the present disclosure, the data processing device can classify and identify the current image frame of the received image transmission data, store the image frames identified as the first type in the first storage device, and store the image frames identified as the second type in the second storage device. By using this method, the image transmission data can be prevented from being decoded b other terminal devices, and the data security is improved.

An embodiment of the present disclosure further provides another pair of racing drone goggles including a third storage device for storing the current image frame group of the first type of the received image transmission data; a fourth storage device for storing the next image frame group of the second type of the received image transmission data; and a processor configured to receive the image transmission data; classify and identify the current image frame group of the image transmission data; store the current image frame group in the third storage device if the current image frame group is the first type; classify and identify the next image frame group adjacent to the current image frame group in the image transmission data; store the next image frame group in the fourth storage device if the next image frame group is the second type; and store the current image frame group of the first type stored in the third storage device in the fourth storage device, where the current image frame group may include one or more image frames, and the next image frame group may include one or more image frames.

Further, after storing the current image frame group of the first type stored in the third storage device in the fourth storage device, the processor may be further configured to reorganized the current image frame group of the first type and the next image frame group of the second type stored in the fourth storage device to obtain the second target video stream when the reorganization instruction is received.

Further, when classifying the identifying the current image frame group of the image transmission data, the processor may be configured to determine the type of the current image frame group of the image transmission data based on the time when the current image frame group of the image transmission data is received.

Further, when classifying the identifying the next image frame group adjacent to the current image frame group in the image transmission data, the processor may be configured to determine the type of the next image frame group of the image transmission data based on the time the next image frame group adjacent to the current image frame group in the image transmission data is received.

Further, the processor may be further configured to verify the access authority of a live broadcast device in response to receiving a data acquisition request sent by the live broadcast device; send the obtained image transmission data to the live broadcast device if the verification is successful; and refuse to send the obtained image transmission data to the live broadcast device if the verification is unsuccessful.

Further, the processor may be further configured to verify the access authority of a live broadcast device in response to receiving a data acquisition request sent by the live broadcast device; send the second target video stream reorganized in the fourth storage device to the live broadcast device if the verification is successful; and refuse to the second target video stream reorganized in the fourth storage device to the live broadcast device if the verification is unsuccessful.

In the embodiments of the present disclosure, the data processing device can classify and identify the current image frame group of the received image transmission data, store the current image frame group in the third storage device if the current image frame group is the first type; classify and identify the next image frame group adjacent to the current image frame group in the image transmission data; store the next image frame group in the fourth storage device if the next image frame group is the second type; and store the current image frame group of the first type stored in the third storage device in the fourth storage device. By using this method, the image transmission data can be prevented from being decoded b other terminal devices, and the data security is improved.

An embodiment of the present disclosure further provides a computer-readable storage medium, and the computer-readable storage medium can store a computer program. When the computer program is executed by a process, the data processing method described in the embodiments corresponding FIG. 3 or FIG. 4 of the present disclosure can be realized, and the data processing device according to the corresponding embodiments of the present disclosure described in FIG. 5 or FIG. 6 can also be realized, which will not be repeated here.

The computer readable storage medium may be an internal storage unit of the device of any of the above-mentioned embodiment, for example, a hard disk or a memory of a computer. The computer readable storage medium may also be an external storage device of the device, for example, a plug-in hard disk, a smart media card (SMC), a secure digital (SD) card, flash card, and the like, which is equipped on the device. Furthermore, the computer readable storage medium may further include both an internal storage unit and an external storage device, of the device. The computer readable storage medium is configured to store the computer program and other programs and data required by the device. The computer readable storage medium may also be used to temporarily store data that has been or will be output.

The above embodiments are only examples of the present disclosure, and do not limit the scope of the present disclosure. Therefore, equivalent changes made based on the claims of the present disclosure still fall within the scope of the present disclosure.

## Claims

1. A data processing method, comprising:
receiving image transmission data;
classifying and identifying a current image frame of the image transmission data; and
storing images frames identified as a first type in a first storage device, and storing the images frames identified as a second type in a second storage device.

2. The method of claim 1, wherein after storing the images frames identified as the first type in the first storage device, and storing the images frames identified as the second type in the second storage device, further comprising:
reorganizing the images frames of the first type stored in the first storage device and the image frames of the second type stored in the second storage device to obtain a first target video stream when a reorganization instruction is received.

3. The method of claim 1, wherein classifying and identifying the current image frame of the image transmission data includes:
detecting whether the current image frame of the image transmission data is a key image frame;
determining the current image frame as the first type image frame if a detection result is positive; and
determining the current image frame as the second type image frame if the detection result is negative.

4. The method of claim 1, wherein classifying and identifying the current image frame of the image transmission data includes:
classifying the current image frame in the image transmission data based on a first classification rule to obtain the first type image frame; and
classifying a next image frame in the image transmission data based on the first classification rule to obtain the second type image frame, the first classification rule being determined based on an image sequence number of the image frame in the image frame, the image sequence number being determined based on an order in which the image frames are transmitted in an image transmission code stream.

5. The method of claim 1, wherein classifying and identifying the current image frame of the image transmission data includes:
classifying the current image frame in the image transmission data based on a second classification rule to obtain the first type image frame; and
classifying the next image frame in the image transmission data based on the second classification rule to obtain the second type image frame, the second classification rule being determined based on a time the image frame in the image frame is received.

6. The method of claim 1 further comprising:
verifying an access authority of a live broadcast device in response to receiving a data acquisition request sent by the live broadcast device;
sending the image transmission data obtained by a data processing device to the live broadcast device if the verification is successful; and
refusing to send the image transmission data obtained by the data processing device to the live broadcast device if the verification is unsuccessful.

7. The method of claim 2 further comprising:
verifying an access authority of a live broadcast device in response to receiving a data acquisition request sent by the live broadcast device;
sending the reorganized first target video stream to the live broadcast device if the verification is successful; and
refusing to send the reorganized first target video stream to the live broadcast device if the verification is unsuccessful.

8. A data processing method comprising:
receiving image transmission data;
classifying and identifying a current image frame group of the image transmission data, and storing the current image frame group in a third storage device if the current image frame group is of a first type;
classifying and identifying a next image frame group adjacent to the current image frame group in the image transmission data, and storing the next image frame group in a fourth storage device if the next image frame group is of a second type; and
storing the current image frame group of the first type stored in the third storage device in the fourth storage device, wherein the current image frame group includes one or more image frames, and the next image frame group includes one or more image frames.

9. The method of claim 8, wherein after storing the current image frame group of the first type stored in the third storage device in the fourth storage device, further comprising:
reorganizing the current image frame group of the first type and the next image frame group of the second type in the fourth storage device to obtain a second target video stream when a reorganization instruction is received.

10. The method of claim 8, wherein classifying and identifying the current image frame group of the image transmission data includes:
determining a type of the current image frame group of the image transmission data based on a time when the current image frame group of the image transmission data is received.

11. The method of claim 8, wherein classifying and identifying the next image frame group adjacent to the current image frame group in the image transmission data includes:
determining a type of the next image frame group of the image transmission data based on a time when the next image frame group adjacent to the current image frame group in the image transmission data is received.

12. The method of claim 8 further comprising:
verifying an access authority of a live broadcast device in response to receiving a data acquisition request sent by the live broadcast device;
sending the obtained image transmission data to the live broadcast device if the verification is successful; and
refusing to send the obtained image transmission data to the live broadcast device if the verification is unsuccessful.

13. The method of claim 9, wherein:
verifying an access authority of a live broadcast device in response to receiving a data acquisition request sent by the live broadcast device;
sending the second target video stream reorganized in the fourth storage device to the live broadcast device if the verification is successful; and
refusing to send the second target video stream reorganized in the fourth storage device to the live broadcast device if the verification is unsuccessful.

14. A data processing device comprising:
a memory storing program instructions; and
a processor configured to call the program instructions that, when executed by the processor, causes the processor to
receive image transmission data;
classify and identify a current image frame of the image transmission data; and
store images frames identified as a first type in a first storage device, and store the images frames identified as a second type in a second storage device.

15. The device of claim 14, wherein after storing the images frames identified as the first type in the first storage device, and storing the images frames identified as the second type in the second storage device, the processor is further configured to:
reorganize the images frames of the first type stored in the first storage device and the image frames of the second type stored in the second storage device to obtain a first target video stream when a reorganization instruction is received.

16. The device of claim 14, wherein the processor classifying and identifying the current image frame of the image transmission data includes:
detecting whether the current image frame of the image transmission data is a key image frame;
determining the current image frame as the first type image frame if a detection result is positive; and
determining the current image frame as the second type image frame if the detection result is negative.

17. The device of claim 14, wherein the processor classifying and identifying the current image frame of the image transmission data includes:
classifying the current image frame in the image transmission data based on a first classification rule to obtain the first type image frame; and
classifying a next image frame in the image transmission data based on the first classification rule to obtain the second type image frame, the first classification rule being determined based on an image sequence number of the image frame in the image frame, the image sequence number being determined based on an order in which the image frames are transmitted in an image transmission code stream.

18. The device of claim 14, wherein the processor classifying and identifying the current image frame of the image transmission data includes:
classifying the current image frame in the image transmission data based on a second classification rule to obtain the first type image frame; and
classifying the next image frame in the image transmission data based on the second classification rule to obtain the second type image frame, the second classification rule being determined based on a time the image frame in the image frame is received.

19. The device of claim 14, wherein the processor is further configured to:
verify an access authority of a live broadcast device in response to receiving a data acquisition request sent by the live broadcast device;
send the image transmission data obtained by a data processing device to the live broadcast device if the verification is successful; and
refuse to send the image transmission data obtained by the data processing device to the live broadcast device if the verification is unsuccessful.

20. The device of claim 15, wherein the processor is further configured to:
verify an access authority of a live broadcast device in response to receiving a data acquisition request sent by the live broadcast device;
send the reorganized first target video stream to the live broadcast device if the verification is successful; and
refuse to send the reorganized first target video stream to the live broadcast device if the verification is unsuccessful.

21. A data processing device comprising:
a memory storing program instructions; and
a processor configured to call the program instructions that, when executed by the processor, causes the processor to
receive image transmission data;
classify and identify a current image frame group of the image transmission data, and store the current image frame group in a third storage device if the current image frame group is of a first type;
classify and identify a next image frame group adjacent to the current image frame group in the image transmission data, and store the next image frame group in a fourth storage device if the next image frame group is of a second type; and
store the current image frame group of the first type stored in the third storage device in the fourth storage device, wherein the current image frame group includes one or more image frames, and the next image frame group includes one or more image frames.

22. The device of claim 21, wherein after storing the current image frame group of the first type stored in the third storage device in the fourth storage device, the processor is further configured to:
reorganize the current image frame group of the first type and the next image frame group of the second type in the fourth storage device to obtain a second target video stream when a reorganization instruction is received.

23. The device of claim 21, wherein the processor classifying and identifying the current image frame group of the image transmission data includes:
determining a type of the current image frame group of the image transmission data based on a time when the current image frame group of the image transmission data is received.

24. The device of claim 21, wherein the processor classifying and identifying the next image frame group adjacent to the current image frame group in the image transmission data includes:
determining a type of the next image frame group of the image transmission data based on a time when the next image frame group adjacent to the current image frame group in the image transmission data is received.

25. The device of claim 21, wherein the processor is further configured to:
verify an access authority of a live broadcast device in response to receiving a data acquisition request sent by the live broadcast device;
send the obtained image transmission data to the live broadcast device if the verification is successful; and
refuse to send the obtained image transmission data to the live broadcast device if the verification is unsuccessful.

26. The device of claim 22, wherein the processor is further configured to:
verify an access authority of a live broadcast device in response to receiving a data acquisition request sent by the live broadcast device;
send the second target video stream reorganized in the fourth storage device to the live broadcast device if the verification is successful; and
refuse to send the second target video stream reorganized in the fourth storage device to the live broadcast device if the verification is unsuccessful.

27. A pair of racing drone goggles, comprising:
a first storage device for storing a first type of image frames of received image transmission data;
a second storage device for storing a second type of image frames of the received image transmission data;
a processor configured to
receive image transmission data;
classify and identify a current image frame of the image transmission data; and
store images frames identified as the first type in the first storage device, and store the images frames identified as the second type in the second storage device.

28. The pair of goggles of claim 27, wherein after storing the images frames identified as the first type in the first storage device, and storing the images frames identified as the second type in the second storage device, the processor is further configured to:
reorganize the images frames of the first type stored in the first storage device and the image frames of the second type stored in the second storage device to obtain a first target video stream when a reorganization instruction is received.

29. The pair of goggles of claim 27, wherein the processor classifying and identifying the current image frame of the image transmission data includes:
detecting whether the current image frame of the image transmission data is a key image frame;
determining the current image frame as the first type image frame if a detection result is positive; and
determining the current image frame as the second type image frame if the detection result is negative.

30. The pair of goggles of claim 27, wherein the processor classifying and identifying the current image frame of the image transmission data includes:
classifying the current image frame in the image transmission data based on a first classification rule to obtain the first type image frame; and
classifying a next image frame in the image transmission data based on the first classification rule to obtain the second type image frame, the first classification rule being determined based on an image sequence number of the image frame in the image frame, the image sequence number being determined based on an order in which the image frames are transmitted in an image transmission code stream.

31. The pair of goggles of claim 27, wherein the processor classifying and identifying the current image frame of the image transmission data includes:
classifying the current image frame in the image transmission data based on a second classification rule to obtain the first type image frame; and
classifying the next image frame in the image transmission data based on the second classification rule to obtain the second type image frame, the second classification rule being determined based on a time the image frame in the image frame is received.

32. The pair of goggles of claim 27, wherein the processor is further configured to:
verify an access authority of a live broadcast device in response to receiving a data acquisition request sent by the live broadcast device;
send the image transmission data obtained by a data processing device to the live broadcast device if the verification is successful; and
refuse to send the image transmission data obtained by the data processing device to the live broadcast device if the verification is unsuccessful.

33. The pair of goggles of claim 28, wherein the processor is further configured to:
verify an access authority of a live broadcast device in response to receiving a data acquisition request sent by the live broadcast device;
send the reorganized first target video stream to the live broadcast device if the verification is successful; and
refuse to send the reorganized first target video stream to the live broadcast device if the verification is unsuccessful.

34. A pair of racing drone goggles, comprising:
a third storage device for storing a current image frame group of a first type of received image transmission data;
a fourth storage device for storing a next image frame group of a second type of the received image transmission data;
a processor configured to
receive image transmission data;
classify and identify the current image frame group of the image transmission data, and store the current image frame group in the third storage device if the current image frame group is of the first type;
classify and identify the next image frame group adjacent to the current image frame group in the image transmission data, and store the next image frame group in the fourth storage device if the next image frame group is of the second type; and
store the current image frame group of the first type stored in the third storage device in the fourth storage device, wherein the current image frame group includes one or more image frames, and the next image frame group includes one or more image frames.

35. The pair of goggles of claim 34, wherein after storing the current image frame group of the first type stored in the third storage device in the fourth storage device, the processor is further configured to:
reorganize the current image frame group of the first type and the next image frame group of the second type in the fourth storage device to obtain a second target video stream when a reorganization instruction is received.

36. The pair of goggles of claim 34, wherein the processor classifying and identifying the current image frame group of the image transmission data includes:
determining a type of the current image frame group of the image transmission data based on a time when the current image frame group of the image transmission data is received.

37. The pair of goggles of claim 34, wherein the processor classifying and identifying the next image frame group adjacent to the current image frame group in the image transmission data includes:
determining a type of the next image frame group of the image transmission data based on a time when the next image frame group adjacent to the current image frame group in the image transmission data is received.

38. The pair of goggles of claim 34, wherein the processor is further configured to:
verify an access authority of a live broadcast device in response to receiving a data acquisition request sent by the live broadcast device;
send the obtained image transmission data to the live broadcast device if the verification is successful; and
refuse to send the obtained image transmission data to the live broadcast device if the verification is unsuccessful.

39. The pair of goggles of claim 35, wherein the processor is further configured to:
verify an access authority of a live broadcast device in response to receiving a data acquisition request sent by the live broadcast device;
send the second target video stream reorganized in the fourth storage device to the live broadcast device if the verification is successful; and
refuse to send the second target video stream reorganized in the fourth storage device to the live broadcast device if the verification is unsuccessful.

40. A computer-readable storage medium comprising:
a computer program stored in the computer-readable storage medium to implement the method according to any one of claims 1 to 13 when the computer program is executed by a processor.
